# EUROPEAN PATENT APPLICATION

(11) **EP 2 112 656 A1**
(43) Date of publication of application: **28.10.2009**
(21) Application number: 08017430.3
(22) Date of filing: 03.10.2008
(51) Int. Cl.: G11B 7/085, G11B 7/135

(54) **Optical disc drive and method of controlling the same**

(30) Priority: 23.04.2008 KR 20080037724
(71) Applicant: Samsung Electronics Co., Ltd., Suwon-si, Gyeonggi-do (KR)
(72) Inventor: Kim, Jae-Hyun, Suwon-si Gyeonggi-do (KR)
(74) Representative: Van Someren, Petronella F. H. M.

(57) **Abstract**

A method of controlling an optical disc drive to drive a multi-layer optical disc includes acquiring actual optimal aberration correction positions of a first layer and a second layer of the multi-layer optical disc while a position of an aberration correction unit is changed, positioning the aberration correction unit at an intermediate point between the aberration correction position of the first layer and the aberration correction position of the second layer, performing a layer jump from the first layer to the second layer of the optical disc, and positioning the aberration correction unit at the aberration correction position of the second layer.

## Description

### BACKGROUND OF THE INVENTION

### 1. Field of the Invention

The present general inventive concept relates to an optical disc drive and a method of controlling the same, and, more particularly, to an optical disc drive to drive a high-density multi-layer optical disc having a high numerical aperture, such as a blu-ray disc (BD), and a method of controlling the same.

### 2. Description of the Related Art

A blu-ray disc (BD) is a high-capacity optical recording medium which succeeds a compact disc (CD) and a digital versatile disc (DVD). In order to realize the high capacity of the optical disc, data recording density should be increased. In addition, a light source having a short wavelength should be used and the numerical aperture (NA) of an object lens should be increased. In another method of realizing the high capacity of the optical disc, an optical disc includes recording layers (hereinafter, referred to as layers), which is also called a multi-layer optical disc. In the multi-layer optical disc, a signal is recorded/reproduced on/from a target layer in a state in which a laser beam is focused on the target layer and an aberration is corrected. A focusing position of the laser beam irradiated when recording/reproducing a signal on/from the optical disc may be switched from the layer to another layer. The change of the focusing position of the laser beam from a layer to another layer is called a layer jump.

In the multi-layer optical disc, a difference between the levels of the focus error signals of layers is significantly large and a linear period of an S-curve of a layer to be jumped is relatively short, due to the short wavelength of the light source and the high NA of the object lens. In the multi-layer optical disc, since the focusing of the laser beam on the target layer and the aberration correction are not performed at the time of the layer jump, the level of the focus error signal of the target layer is small and the linear period of the S-curve is significantly short. Accordingly, a probability that a defocusing of the laser beam takes place during the layer jump is high and, as a result, a failure rate of the layer jump is increased.

### SUMMARY OF THE INVENTION

The present general inventive concept provides an optical disc drive to focus a laser beam on a target layer at a high accuracy at a time of a layer jump of a multi-layer optical disc.

The present general inventive concept provides an optical disc drive which has a high stability at a time of a layer jump since a laser beam is focused on a target layer at high accuracy at the time of a layer jump of an optical disc.

Additional aspects and/or advantages of the present general inventive concept will be set forth in part in the description which follows and, in part, will be obvious from the description, or may be learned by practice of the general inventive concept.

The foregoing and/or other aspects and utilities of the general inventive concept may be achieved by providing a method of controlling an optical disc drive, the method including acquiring actual optimal aberration correction positions of a first layer and a second layer of a multi-layer optical disc while a position of an aberration correction unit is changed, positioning the aberration correction unit at an intermediate point between the aberration correction position of the first layer and the aberration correction position of the second layer, performing a layer jump from the first layer to the second layer of the optical disc, and positioning the aberration correction unit at the aberration correction position of the second layer.

The method may further include increasing a focus servo gain of the second layer before the aberration correction unit is positioned at the intermediate point.

The method may further include decreasing the focus servo gain of the second layer to a value before the focus servo gain is increased, after the layer jump is performed.

The method may further include positioning the aberration correction unit at the aberration correction position of the second layer before the focus servo gain is decreased and after the layer jump is performed.

The aberration correction unit may be a collimator lens.

The optical disc drive may drive a blu-ray disc (BD).

The foregoing and/or other aspects and utilities of the general inventive concept may also be achieved by providing a method of controlling an optical disc drive, the method including acquiring actual optimal aberration correction positions of a first layer and a second layer of a multi-layer optical disc while a position of an aberration correction unit is changed, increasing a focus servo gain of a target layer of the optical disc in order to perform a layer jump from the first layer to the second layer, positioning the aberration correction unit at an intermediate point between the aberration correction position of the first layer and the aberration correction position of the second layer, performing the layer jump from the first layer to the second layer of the optical disc, positioning the aberration correction unit at the aberration correction position of the second layer, and decreasing the focus servo gain of the target layer to a value before the focus servo gain is increased.

The method may further include positioning the aberration correction unit at the aberration correction position of the second layer before the focus servo gain is decreased and after the layer jump is performed.

The aberration correction unit may be a collimator lens.

The optical disc drive may drive a blu-ray disc (BD).

The foregoing and/or other aspects and utilities of the general inventive concept may also be achieved by providing an optical disc drive including an aberration correction unit to correct aberration of a laser beam reflected from a first layer and a second layer of a multi-layer optical disc, and a controller to acquire actual optimal aberration correction positions of the first layer and the second layer of a multi-layer optical disc while a position of an aberration correction unit is changed, position the aberration correction unit at an intermediate point between the aberration correction position of the first layer and the aberration correction position of the second layer, to perform a layer jump from the first layer to the second layer of the optical disc, and to position the aberration correction unit at the aberration correction position of the second layer.

The controller may control a focus servo gain of the second layer to be increased before the aberration correction unit is positioned at the intermediate point, and control the focus servo gain of the second layer to be decreased to a value before the focus servo gain is increased and after the layer jump is performed.

The aberration correction unit may include a collimator lens, and an actuator to drive the collimator lens in an optical axis direction.

The foregoing and/or other aspects and utilities of the general inventive concept may also be achieved by providing an optical disc drive usable with one or more optical discs, the optical disc drive including a target layer on one of the optical discs, and a laser diode to emit a laser beam on the target layer, wherein the laser beam is focused on the target layer at a time of a layer jump of the one optical disc.

The foregoing and/or other aspects and utilities of the general inventive concept may also be achieved by providing a method of performing a layer jump with an optical disc drive, the method including identifying a target layer on an optical disc, emitting a laser beam on the target layer such that the laser beam is focused on the target layer at a time of the layer jump of the optical disc.

The foregoing and/or other aspects and utilities of the general inventive concept may also be achieved by providing a computer-readable recording medium having embodied thereon a computer program to execute a method, wherein the method including identifying a target layer on an optical disc, emitting a laser beam on the target layer such that the laser beam is focused on the target layer at a time of a layer jump of the optical disc.

The foregoing and/or other aspects and utilities of the general inventive concept may also be achieved by an optical disc drive including a laser diode unit to emit a laser on a first layer and a second layer of an optical disc, and a controller to acquire a first aberration correction position of the first layer and a second aberration correction position of the second layer, and to control the laser diode unit to position the laser at an intermediate point between the first aberration correction position and the second aberration correction position for aberration correction.

The controller may control the laser diode unit to move the laser from the first layer to the second layer.

The controller may control the laser diode unit to position the laser to the second layer from the intermediate point for aberration.

The aberration corrections may be performed when the laser is on the first layer, the intermediate point, and the second layer.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a view illustrating an optical disc according to an embodiment of the present general inventive concept;
FIG. 2 is a block diagram illustrating an optical disc drive according to an embodiment of the present general inventive concept;
FIG. 3 is a view illustrating controlling a pickup module for the layer jump of the optical disc illustrated in FIG. 1;
FIGS. 4A, 4B and 4C are views illustrating characteristics of a focus error signal of an optical disc drive according to an embodiment of the present general inventive concept; and
FIG. 5 is a flowchart illustrating a method of controlling an optical disc drive according to an embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below to explain the present general inventive concept by referring to the figures.

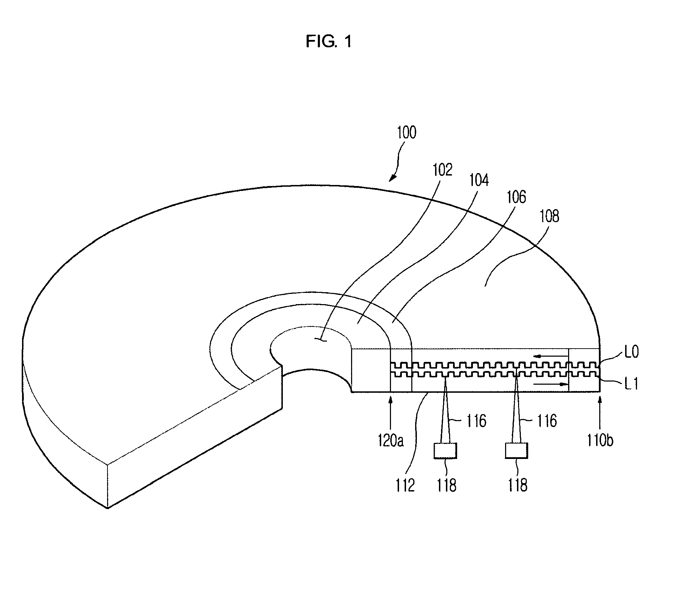

Exemplary embodiments of the present general inventive concept will be described with reference to FIGS. 1 to 5. First, FIG. 1 is a view illustrating an optical disc 100 according to an embodiment of the present general inventive concept. As illustrated in FIG. 1, the optical disc 100 according to the present embodiment includes two recording layers L0 and L1 to record information. In an optical disc having two layers (called a dual layer optical disc), a low recording layer is denoted by a "layer 1" and a high recording layer is denoted by a "layer 0". On a surface of the layer 1 (L1), a protective layer 112 to protect the layer 1 (L1) from external impact is formed. The surface of the protective layer 112 becomes the surface of the disc 100.

The low recording layer L1 may be a layer where data is recorded in high density. The high record layer L0 may be a layer where data is recorded in low density.

In the two layers L0 and L1 of the optical disc 100 according to the present embodiment, successive spiral tracks on which information is recorded are formed. A pickup module 118 irradiates a laser beam 116 onto the track of a target layer while moving from an inner circumference 120a to an outer circumference 120b of the optical disc 100 or from the outer circumference 110b to the inner circumference 120a, to record/reproduce/erase the information.

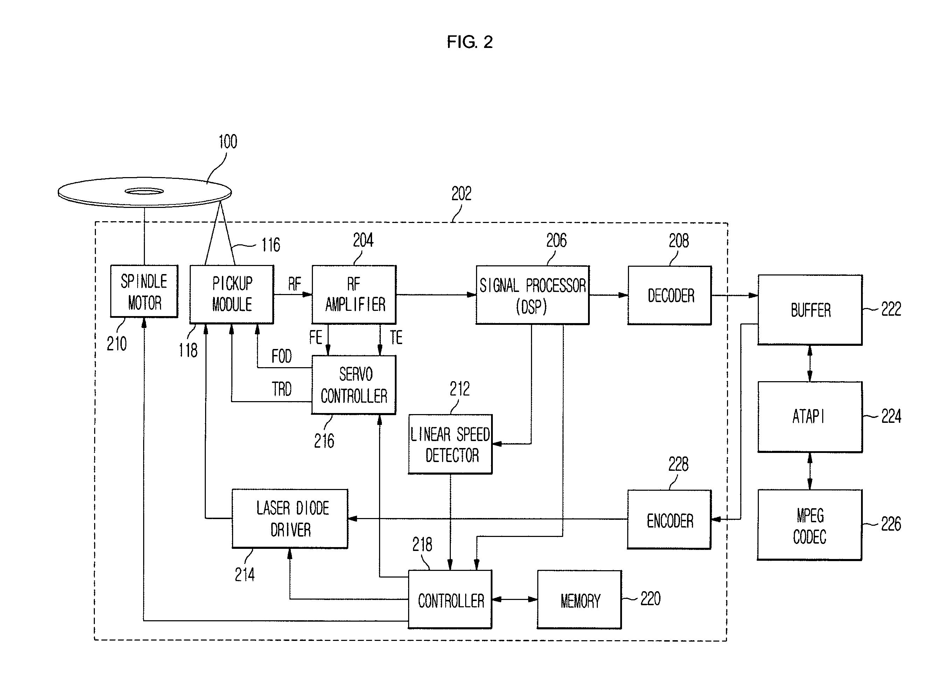

FIG. 2 is a block diagram illustrating an optical disc drive according to an embodiment of the present general inventive concept. In FIG. 2, a reference numeral 202 denotes an optical disc drive, and a buffer 222, an advanced technology attachment packet interface (ATAPI) 224 and an MPEG CODEC 226 are components of other devices (e.g., a DVD player, a computer or the like) connected to the optical disc drive 202. If necessary, the buffer 222, the ATAPI 224 and the MPEG CODEC 226 may be integrated into the optical disc drive 202. The ATAPI is a representative data communication interface between the optical disc drive and a CODEC chip.

As illustrated in FIG. 2, the optical disc 100 rotates by driving a spindle motor 210. The spindle motor 210 is controlled by a driving signal generated by a controller 218 so as to rotate the optical disc 100.

The pickup module 118 includes a laser diode. A laser beam having recording power is irradiated onto a recording surface of the optical disc 100 by the laser diode such that information is recorded on the optical disc 100 and a laser beam having reproduction power is irradiated onto the optical disc 100 such that information recorded on the optical disc 100 is reproduced (read). When information is erased, erasing power is used.

When information is recorded on the optical disc 100, recorded information is encoded by an encoder 228 and the encoded information is provided to a laser diode driver 214. The controller 218 provides a driving signal to record the encoded information on the information recording surface of the optical disc 100 to the laser diode driver 214 so as to change the recording power of the laser diode.

When the information recorded on the optical disc 100 is reproduced, the controller 218 controls the laser diode in the pickup module 118 to generate laser beam having the reproduction power such that the laser beam is irradiated onto the surface of the information recording layer of the optical disc 100. The laser beam irradiated onto the optical disc 100 is reflected from the surface of the information recording layer and is received by a light receiving portion (e.g., a photodiode) in the pickup module 118. The light receiving portion generates an RF signal corresponding to an amount of received light. An RF amplifier 204 receives the RF signal, amplifies the RF signal, and converts the amplified RF signal into a binary signal. The binary signal obtained by the RF amplifier 204 is restored to digital data by a signal processor 206. Since the restored digital data is in an encoded state, the restored digital data is decoded to digital data before encoding by a decoder 208. The signal processor 206 calculates a beta (β) value, a gamma (y) value, a peak value, a bottom value and an average value from the RF signal and provides the respective values to the controller 218. A linear speed detector 212 detects the linear speed of the rotated optical disc 100 and provides the linear speed to the controller 218.

The RF amplifier 204 extracts a tracking error (TE) signal and a focus error (FE) signal from the received RF signal and provides the respective error signals to a servo controller 216. The servo controller 216 generates a focus driving signal FOD on a basis of the FE signal and performs focus servo control of the pickup module 118. The focus driving signal FOD is a signal to drive a focus actuator to move an object lens in the pickup module 118. The focus actuator controls the object lens to move along the surfaces of the recording layers L0 and L1 in a normal direction of surfaces of the recording layers while vibrating. The focus driving signal FOD is also a signal to mechanically move the object lens in an optical axis direction which is the normal direction of the surface 212 of the disc. The mechanical movement is made for an adjustment of a distance between the object lens and the optical disc 100, unlike a movement of the focus actuator along the surfaces of the recording layers L0 and L1. The servo controller 216 generates a tracking driving signal TRD on a basis of the TE signal and performs tracking control of the pickup module 118.

In FIG 2, the controller 218 controls an entire operation of the optical disc drive 202. An external memory 220 which stores information necessary to control the entire operation of the optical disc drive 202 or data generated in a control process is connected to the controller 218.

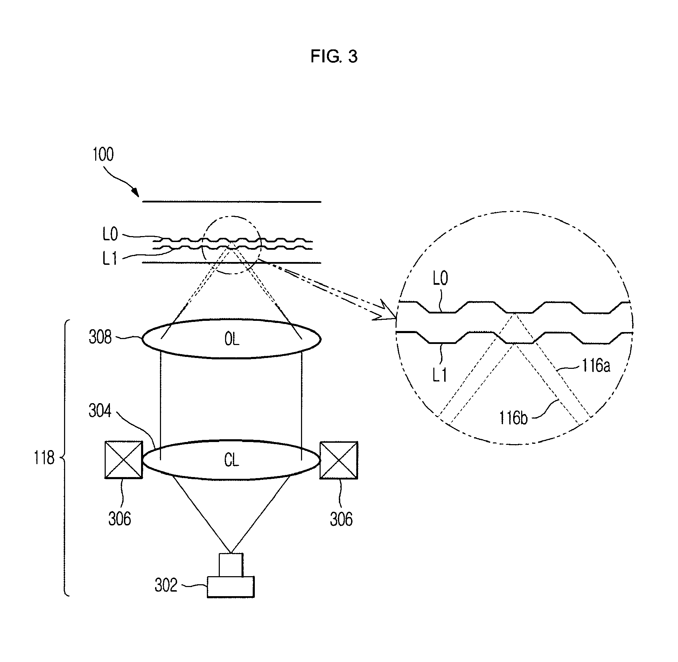

FIG. 3 is a view illustrating the concept of controlling the pickup module for the layer jump of the optical disc illustrated in FIG. 1. As illustrated in FIG. 3, the pickup module 118 according to the present embodiment includes a laser diode 302, a collimator lens 304, and an object lens 308. The collimator lens 304 is an aberration correction unit which is driven by a collimator lens actuator 306. The object lens 308 performs focus control.

In a high-density disc such as a blu-ray disc (BD) or a HD-DVD, a signal distortion occurs due to an aberration. In an optical disc drive to drive the BD or the HD-DVD, the collimator lens 304 is used to reduce the aberration. The collimator lens 304 is moved forward or backwards by the collimator lens actuator 306 in the optical axis direction so as to change characteristics of the laser beam 116 such that the aberration is corrected.

In FIG. 3, shapes of the beams which are irradiated on the layers L0 and L1 of the optical disc 100 by driving the object lens 308 are enlarged and illustrated in a circle. As can be seen from the enlarge portion, when the object lens 308 is positioned at a focusing position of the layer 0 (L0), a focal point 116a of the laser beam is formed on the surface of the layer 0 (L0). In contrast, when the object lens 308 is positioned at a focusing position of the layer 1 (L1), a focal point 116b of the laser beam is formed on the surface of the layer 1 (L1).

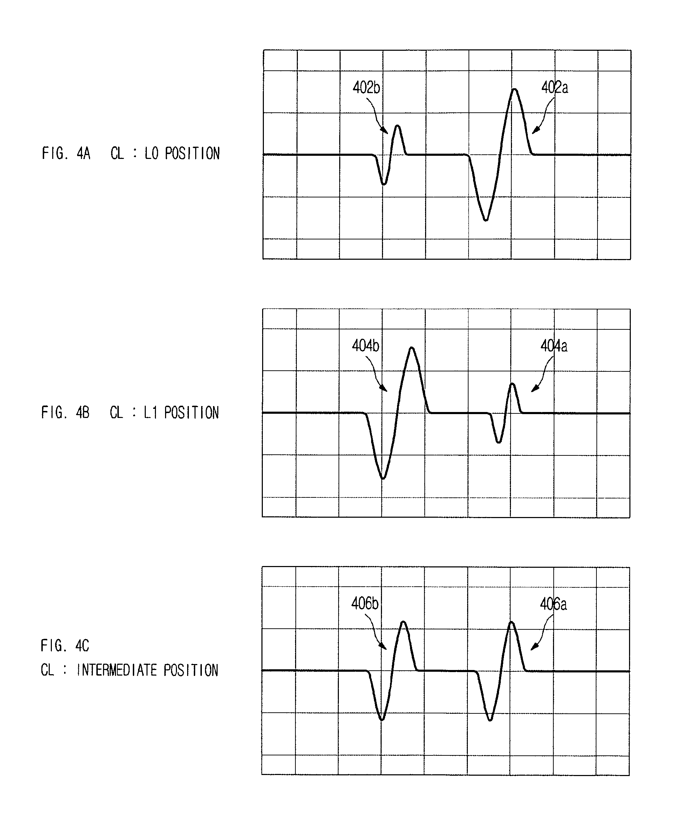

FIGS. 4A, 4B, and 4C are views illustrating characteristics of the FE signal of the optical disc drive according to an embodiment of the present general inventive concept. In an S-curve of the FE signal of a multi-layer optical disc, a size of the S-curve corresponding to each layer varies depending on which layer the laser beam 116 is currently focused on.

FIG. 4A illustrates the FE signal when the laser beam 116 is focused on the layer 0 (L0), in which the S-curve 402a of the layer 0 (L0) is larger than the S-curve of the layer 1 (L1). The linear period of the S-curve 402b of the layer 1 (L1) is shorter than that of the S-curve of the layer 0 (L0).

FIG. 4B illustrates the FE signal when the laser beam 116 is focused on the layer 1 (L1), in which the S-curve 404b of the layer 1 (L1) is larger than the S-curve of the layer 0 (L0). The linear period of the S-curve 404a of the layer 0 (L0) is shorter than that of the S-curve of the layer 1 (L1). Accordingly, if the layers corresponding to the smaller S-curves 402b and 404a are target layers when the layer jump is performed, the focus control becomes unstable due to the short linear period of the S-curve. Thus, the stability of the layer jump deteriorates.

FIG. 4C illustrates a FE signal when the collimator lens 304 (FIG. 3) is positioned at an "intermediate point" according to the present embodiment. Here, the "intermediate point" indicates an intermediate point between an aberration correction position of the layer 0 (L0) and an aberration correction position of the layer 1 (L1) of the collimator lens 304. The aberration correction position of the layer 0 (L0) indicates the position of the collimator lens 304 in which the aberration is minimized when the current focus control is performed with respect to the layer 0 (L0). The aberration correction position of the layer 1 (L1) indicates the position of the collimator lens 304 in which the aberration is minimized when the current focus control is performed with respect to the layer 1 (L1). The "intermediate point" may be shifted to the aberration correction position of the layer 0 (L0) and may be shifted to the aberration correction position of the layer 1 (L1) as necessary. When the collimator lens 304 is positioned at the "intermediate point", sizes of the S-curve 406a of the layer 0 (L0) and the S-curve 406b of the layer 1 (L1) are similar to each other. In the present embodiment, when the collimator lens 304 is positioned at the "intermediate point" when the layer jump is performed, a relatively large linear period is ensured in both the S-curves 406a and 406b of the FE signal. Accordingly, the laser beam is accurately focused on the target layer and thus the stable layer jump is realized.

In the present embodiment, the aberration correction positions of the layer 0 (L0) and the layer 1 (L1), which are criteria to determine the "intermediate point", are not acquired by computation or estimation, that is, are actual positions acquired while adjusting the position of the collimator lens 304. If the aberration correction positions of the layer 0 (L0) and the layer 1 (L1) are acquired by computation or estimation, the obtained aberration correction positions may be different from the actual positions and thus an accurate "intermediate point" cannot be obtained. That is, referring to FIGS. 2 and 3, since the aberration correction positions obtained by computation or estimation do not include a deviation of the optical disc 100 or the optical disc drive 202, a probability that the positions are shifted to any one of the current layer or the target layer is significantly high and thus a failure rate of the layer jump is increased. Accordingly, in the embodiment of the present general inventive concept, the actual optimal aberration correction positions of the layer 0 (L0) and the layer 1 (L1), which are the criteria to determine the "intermediate point", are acquired while adjusting the position of the collimator lens 304. Thus, a success rate of the layer jump is increased.

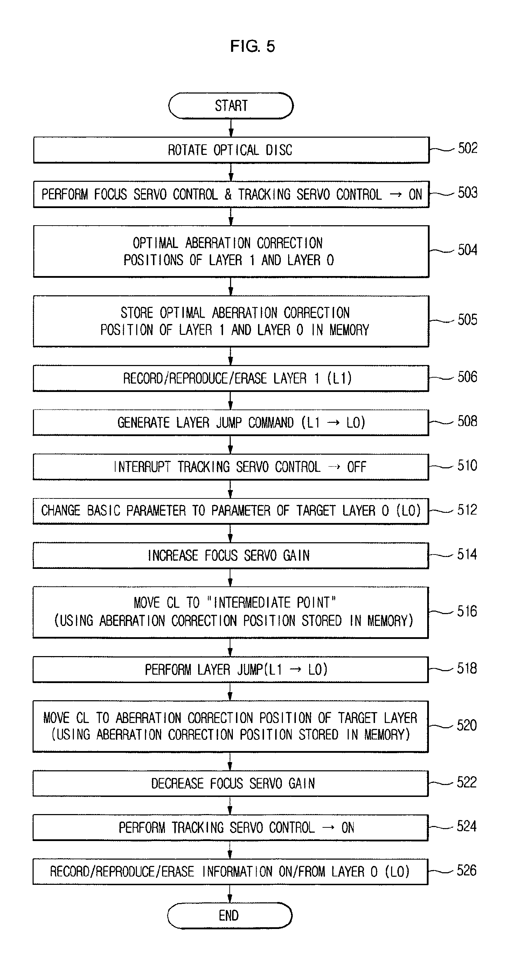

FIG. 5 is a flowchart illustrating a method of controlling an optical disc drive according to an embodiment of the present general inventive concept, that is, a method of controlling the layer jump of a multi-layer optical disc having at least two layers. As illustrated in FIG. 5, when the optical disc 100 is loaded on the optical disc drive 202, the spindle motor 210 is driven to rotate the optical disc 100 (operation 502). When the optical disc 100 rotates at a predetermined speed or more, the focus servo control and the tracking servo control are performed with respect to the optical disc 100 such that the laser beam 116 is focused along the track formed on the layer 1 (L1) of the optical disc 100 (operation 503). The actual optimal aberration correction positions of the layer 0 (L0) and the layer 1 (L1), which are criteria to determine the "intermediate point", are acquired while adjusting the position of the collimator lens 304 (operation 504). The actual optimal aberration correction positions of the layer 0 (L0) and the layer 1 (L1) are stored in the memory 220 (operation 505). The optimal aberration correction positions stored in the memory 220 becomes criteria to determine the "intermediate point" when the layer jump is performed later. When the focus servo control and the tracking servo control become stable, recording/reproduction/erasing of information on/from the layer 1 (L1) is performed (operation 506).

If recording/reproduction/erasing of the information on/from the layer 1 (L1) is completed or the layer jump to the layer 0 (L0) is required, the controller 218 generates and outputs a layer jump command to the servo controller 216 (operation 508). When the layer jump command is generated, the servo controller 216 interrupts the tracking servo control and performs only the focus servo control (operation 510). The controller 218 changes a basic parameter to a parameter corresponding to the layer 0 (L0) which is a target layer, for the layer jump (operation 512). At this time, the changed parameter includes a servo system parameter such as the gain or the offset of a focus servo control signal and a tracking servo control signal and a recovery system parameter such as the gain or the offset of an RF signal.

The controller 218 controls the servo controller 216 so as to further increase a focus servo gain before the collimator lens 304 is moved to the "intermediate point" after the parameter is changed. In the present embodiment, when the collimator lens 304 is positioned at the "intermediate point", a difference between sizes of the S-curves is reduced and a large linear period is ensured such that the stable layer jump is realized. Due to the deviation of the collimator lens actuator 306 or the deviation of the optical disc 100, defocusing may take place while the collimator lens 304 is moved. Accordingly, before the collimator lens 304 is moved to the "intermediate point", the focus servo gain is further increased such that a stable focus control is maintained.

In a state in which the focus servo gain is increased, the collimator lens 304 is moved to the "intermediate point" (operation 516). Here, the "intermediate point" is determined on a basis of the actual optimal aberration correction positions of the layer 0 (L0) and the layer 1 (L1) stored in the memory 220. The "intermediate point" and the reason why the collimator lens 304 is moved to the "intermediate point" were described, for example, with reference to FIG. 4. When the collimator lens 304 is positioned at the "intermediate point", the layer jump from the current layer 1 (L1) to the target layer 0 (L0) is performed (operation 518). That is, the focus control of the pickup module 118 is moved from the layer 1 (L1) to the layer 0 (L0). When the layer jump is successfully completed, the collimator lens 304 is moved to a position corresponding to the target layer 0 (L0) (operation 520). At this time, the position to which the collimator lens 304 is moved is the actual optimal aberration correction position of the layer 0 (L0) stored in the memory 220. When the movement of the collimator lens 304 is completed, the focus servo gain is normalized (operation 522). The normalization of the focus servo gain indicates that the focus servo gain is returned to the focus servo gain which is set as the basic parameter before the focus servo gain is increased in Operation 514. The tracking servo control which is interrupted for the layer jump is activated (operation 524). In a state in which the position of the collimator lens 304 and the focus servo gain are controlled to correspond to the target layer 0 (L0) and the tracking servo control is activated, information is recorded/reproduced/erased on/from the new layer 0 (L0) (operation 526).

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.
Although various embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. A method of controlling an optical disc drive, the method comprising:
acquiring actual optimal aberration correction positions of a first layer and a second layer of a multi-layer optical disc while a position of an aberration correction unit is changed; positioning the aberration correction unit at an intermediate point between the aberration correction position of the first layer and the aberration correction position of the second layer;
performing a layer jump from the first layer to the second layer of the optical disc; and
positioning the aberration correction unit at the aberration correction position of the
second layer.

2. The method according to claim 1, further comprising:
increasing a focus servo gain of the second layer before the aberration correction unit is positioned at the intermediate point.

3. The method according to claim 2, further comprising:
decreasing the focus servo gain of the second layer to a value before the focus servo gain is increased, after the layer jump is performed.

4. The method according to claim 3, further comprising:
positioning the aberration correction unit at the aberration correction position of the second layer before the focus servo gain is decreased and after the layer jump is performed.

5. The method according to claim 1, wherein the aberration correction unit is a collimator lens.

6. The method according to claim 1, wherein the optical disc drive drives a blu-ray disc (BD).

7. A method of controlling an optical disc drive, the method comprising:
acquiring actual optimal aberration correction positions of a first layer and a second layer of a multi-layer optical disc while a position of an aberration correction unit is changed; increasing a focus servo gain of the second layer of the optical disc in order to perform a layer jump from the first layer to the second layer;
positioning the aberration correction unit at an intermediate point between the aberration correction position of the first layer and the aberration correction position of the second layer;
performing the layer jump from the first layer to the second layer of the optical disc; positioning the aberration correction unit at the aberration correction position of the second layer; and
decreasing the focus servo gain of the second layer to a value before the focus servo gain is increased.

8. The method according to claim 7, further comprising:
positioning the aberration correction unit at the aberration correction position of the second layer before the focus servo gain is decreased and after the layer jump is performed.

9. The method according to claim 7, wherein the aberration correction unit is a collimator lens.

10. The method according to claim 7, wherein the optical disc drive drives a blu-ray disc (BD).

11. An optical disc drive, comprising:
an aberration correction unit to correct aberration of a laser beam reflected from a first layer and a second layer of a multi-layer optical disc; and
a controller to acquire actual optimal aberration correction positions of the first layer and
the second layer of a multi-layer optical disc while a position of an aberration correction unit is changed, to position the aberration correction unit at an intermediate point between the aberration correction position of the first layer and the aberration correction position of the second layer, to perform a layer jump from the first layer to the second layer of the optical disc, and to position the aberration correction unit at the aberration correction position of the second layer.

12. The optical disc drive according to claim 11, wherein the controller controls a focus servo gain of the second layer to be increased before the aberration correction unit is positioned at the intermediate point, and controls the focus servo gain of the second layer to be decreased to a value before the focus servo gain is increased and after the layer jump is performed.

13. The optical disc drive according to claim 11, wherein the aberration correction unit comprises:
a collimator lens; and
an actuator to drive the collimator lens in an optical axis direction.
